(19) Europäisches Patentamt
European Patent Office
Office européen des brevets

(11) **EP 2 923 075 B1**

(12) **EUROPEAN PATENT SPECIFICATION**

(45) Date of publication and mention
of the grant of the patent:
**20.02.2019 Bulletin 2019/08**

(51) Int Cl.:
*F03B 3/12* *(2006.01)*          *F03B 3/02* *(2006.01)*
*F01D 5/04* *(2006.01)*

(21) Application number: **12881525.5**

(22) Date of filing: **03.12.2012**

(86) International application number:
**PCT/NO2012/000066**

(87) International publication number:
**WO 2013/103304 (11.07.2013 Gazette 2013/28)**

(54) **A FRANCIS TURBINE RUNNER**

FRANCIS-TURBINEN-LAUFRAD

ROUE DE TURBINE FRANCIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2012 NO 20120005
23.08.2012 US 201261692247 P**

(43) Date of publication of application:
**30.09.2015 Bulletin 2015/40**

(73) Proprietor: **Rainpower Technology AS
2007 Kjeller (NO)**

(72) Inventor: **GULBRANDSEN, Geir
1476 Rasta (NO)**

(74) Representative: **Johansson, Lars E.
Hynell Patenttjänst AB
P.O. Box 138
683 23 Hagfors (SE)**

(56) References cited:
**JP-A- 2004 156 587      US-A1- 2011 008 150
US-A1- 2011 008 150**

**Description**

The invention relates to a Francis turbine runner for inlet head above 200 m, comprising a band, a crown concentric with the band, and a plurality of spaced blades between the band and the crown, for rotation about a turbine axis by the action of water flowing between adjacent blades.

In a Francis turbine water with high pressure flows into a spiral casing which distributes the water around the periphery. The water then flows between a system of vanes, normally stationary stay vanes and movable guide vanes, for adjusting the amount of water going through the turbine. After flowing between the guide vanes the water flows into the rotating runner which transfers most of the energy of the water into mechanical energy on the turbine shaft. Then the water leaves the turbine through a draft tube.

The geometry of the blades in a Francis turbine runner may cause instabilities in the water flow, which may lead to pressure pulsations. In a Francis turbine runner according to prior art all blades and their position relative to the band, the crown and each other are made as equal as practically possible, which means that the time interval between the pressure pulsations will be almost equal around the circumference of the runner. The pressure pulsations may therefore interfere with and add to each other, which may create noise and vibrations. This can be a problem for the turbine operation, particularly if the noise or vibrations cause resonance in the turbine. The problem is particularly pronounced for some Francis turbines with inlet head above 200 m.

US2011/0008150 discloses a wheel of the Francis type that comprises a ring with revolution symmetry about the rotation axis of the wheel, and curved blades connected to the ring and each having an outer peripheral edge and an inner central edge. The connection points between the ring and the inner central edges of the blades are located on a same circle centered on the axis. The connection points between the ring and the outer peripheral edges of the blades are located on at least two distinct circles centered on the axis. By this constructing the generation of rotating radial forces at transient speeds are attempted to be limited. However, the construction does not reduce the risk that pressure pulsations arising from the rotation of the wheel interfere with each other. By such an interference, noises and vibrations are build up.

The object of the invention is to provide a Francis turbine runner for inlet head above 200 m in which the problem discussed above is reduced or eliminated.

The object is achieved according to the invention with the features of the description and the claims.

Thus the invention relates to a Francis turbine runner for inlet head above 200 m, comprising a band, a crown concentric with the band, and a plurality of spaced blades between the band and the crown, for rotation about a turbine axis by the action of water flowing between adjacent blades, into a central outlet area and out from the turbine runner through an outlet of the band with an outlet diameter, each blade has a leading suction side, as seen in the rotational direction, a trialing pressure side, a band side connected to the band, a crown side connected to the crown, an inlet side, and an outlet side, the blades are arranged with their inlet sides around the circumference of the runner, each blade has an inlet diameter, the blades collectively have a mean inlet diameter. According to the invention, at least one blade has an inlet diameter with a deviation from the mean inlet diameter of 0.5 to 3% of the band outlet diameter.

"Deviation" shall mean both positive and negative deviation. Thus, according to the invention, at least one of the blades has an inlet diameter which is either 0.5 to 3% of the band outlet diameter smaller than the mean inlet diameter or 0.5 to 3% of the band outlet diameter greater than the mean inlet diameter.

Preferably the inlet diameter deviation is 0.75 to 1.5% of the band outlet diameter.

Preferably the Francis turbine runner according to the invention is arranged to provide a non-cyclic variation of the blades' inlet diameter around the circumference. This can be achieved by a runner with more than one blade with the deviation, and non-uniform angular distances between blades with the deviation in the same direction. "Blades with the deviation in the same direction" means blades which either have inlet diameters smaller than the mean inlet diameter or have inlet diameters greater than the mean inlet diameter. Preferably also the angular distances between blades without the deviation is varied along the circumference. Preferably at least one blade with the deviation has an inlet diameter greater than the mean inlet diameter and at least one blade with the deviation has an inlet diameter smaller than the mean inlet diameter.

Preferably at least one blade's inlet side has a symmetrical or asymmetrical rounding, forming a nose. For a blade with an inlet diameter smaller than the mean inlet diameter, the nose is preferably towards the pressure side, and for a blade with an inlet diameter greater than the mean inlet diameter, the nose is preferably towards the suction side.

The features of the invention cause variations in the time intervals between the above mentioned pressure pulsations. Compared to a Francis turbine runner according to prior art, in which these time intervals are almost equal, a Francis turbine runner according to the invention will have less interference between the pressure pulsations, and consequently less noise and vibrations.

The invention also relates to a method for manufacturing a Francis turbine runner for inlet head above 200 m, comprising a band, a crown concentric with the band, and a plurality of spaced blades between the band and the crown, for rotation about a turbine axis by the action of water flowing between adjacent blades, into a central outlet area and out from the turbine runner through an outlet of the band with an outlet diameter, each blade has a leading suction side, as seen in the rotational direction, a trialing pressure side, a band side connected to the band, a crown side connected to the crown, an inlet side, and an outlet side, the blades are arranged with their inlet sides around the circumference of the runner, each blade has an inlet diameter, the blades collectively have a mean inlet diameter, comprising the steps of:

1) manufacturing the band and the crown;

2) manufacturing all blades identical, with an oversize adapted to assemble the blades with an inlet diameter 0.5 to 3% of the band outlet diameter greater than the mean inlet diameter of the finished runner;

3) assembling the blades between the band and the crown, with an inlet diameter 0.5 to 3% of the band outlet diameter greater than the mean inlet diameter of the finished runner;

4) machining some blades' inlet sides to an inlet diameter 0.5 to 3% of the band outlet diameter smaller than the mean inlet diameter of the finished runner, to introduce a non-cyclic variation of the blades inlet diameters around the circumference of the runner.

Preferably the range 0.5 to 3% in step 2), 3) and 4) is replaced by 0.75 to 1.5%.

The invention solves or reduces a problem related to the interaction between the water flow and the inlet sides of the turbine blades, and from this it follows that the invention applies to the portions of the inlet sides which interact with the principal part of the water flow. Portions of the inlet sides with less or minor interaction with the water flow do not need to fulfil the inventive idea.

The invention will now be described, by way of example, with reference to the accompanying drawings, in which:

Fig. 1 is a side view of a Francis turbine;
Fig. 2 is a top view of the Francis turbine in fig. 1;
Fig. 3 is a side view of a Francis turbine runner;
Fig. 4 is a top view of a Francis turbine runner;
Fig. 5 is a diagrammatic partial cross sectional view of a Francis turbine runner according to the invention;
Fig. 6 is a comparison between a Francis turbine blade according to the invention and prior art;
Fig. 7 is a comparison between a Francis turbine blade according to the invention and prior art;
Fig. 8 is a diagrammatic cross sectional view of blades of a Francis turbine runner according to the invention;
Fig. 9 is a diagrammatic cross sectional view of blades of a Francis turbine runner according to the invention;
Fig. 10 is a diagrammatic cross sectional view of blades of a Francis turbine runner according to the invention;
Fig. 11 is a diagrammatic cross sectional view of a blade of a Francis turbine runner according to the invention;
Fig. 12 is a diagrammatic partial cross sectional view of a Francis turbine runner according to the invention during its production; and
Fig. 13 is a diagrammatic partial cross sectional view of a Francis turbine runner according to the invention.

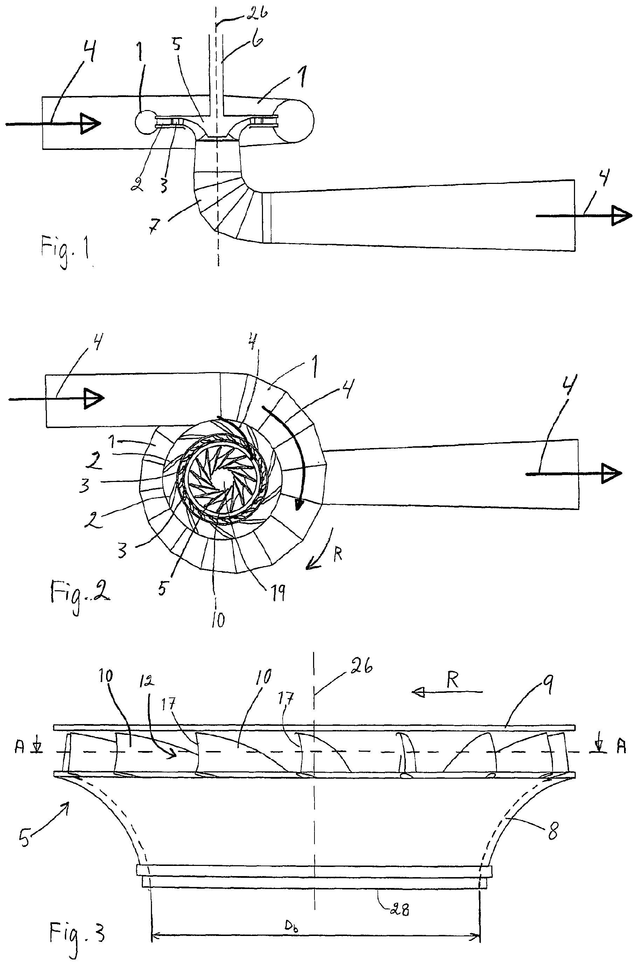

Reference is made to fig. 1 and 2, which is a side view and top view, respectively, of a Francis turbine. The Francis turbine comprises a stationary spiral casing 1 which distributes incoming high pressure water 4 around the periphery of the turbine. The water then flows between and is guided by fixed stay vanes 2 and pivotable guide vanes 3, for adjusting the amount of water flowing through the turbine. From the guide vanes 3 the water enters a runner 5.

For a further explanation, reference is made to fig. 3, which is a side view of the runner 5. The runner 5 comprises a band 8, a crown 9 concentric with the band, and blades 10 located between and fastened to or integral with the band and the crown. The band 8 and/or crown 9 are attached to a shaft 6 with its axis 26.

When entering the runner 5, the water hits the turbine blades 10, causing the blades and thereby the band 8, crown 9 and shaft 6 to rotate in the direction R. Then the water flows into a central outlet area 19, and out from the turbine runner through an outlet 28 of the band 8, into the draft tube 7 and leaves the turbine. As seen in fig. 3, the outlet 28 of the band has an internal diameter $D_b$.

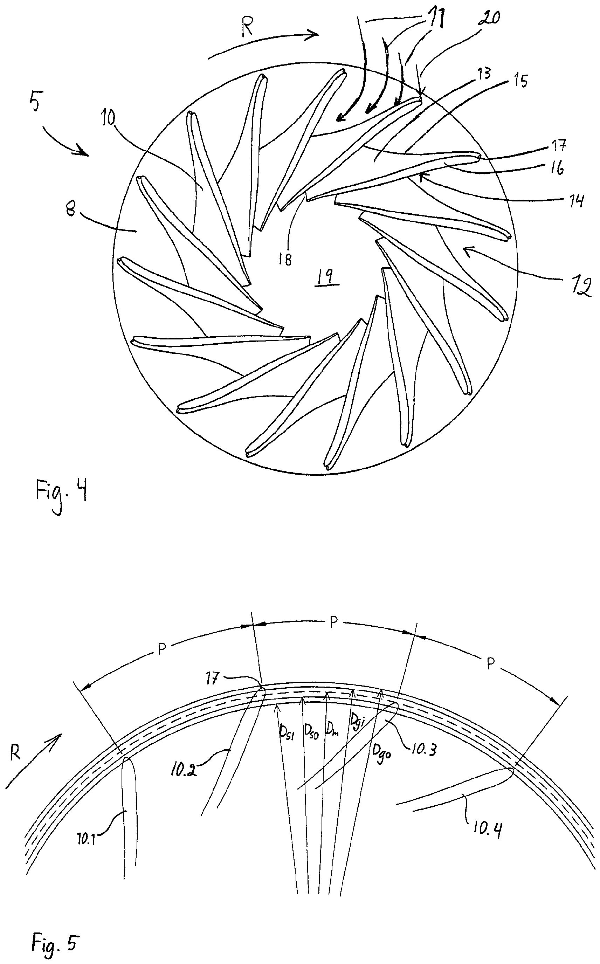

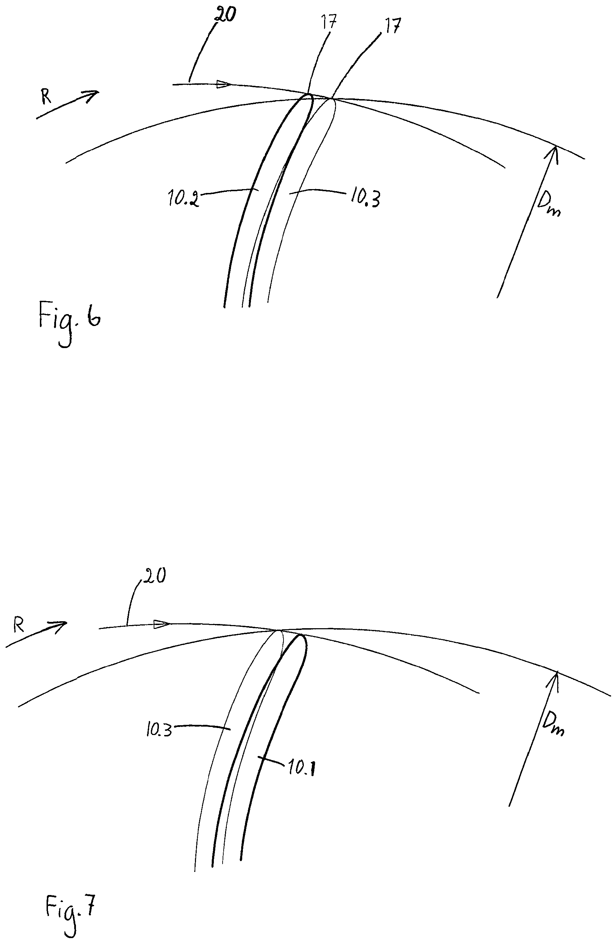

Fig. 4 is a top view of the runner 5 with the crown 9 removed, showing the blades 10 and the band 8. Fig. 4 illustrates in more detail how the flow of water 11 from the guide vanes 3 hits the blades 10 and gives off most of its energy, causing the water to change direction and flow into runner channels 12 formed between adjacent blades 10, and further into the outlet area 19. A portion 20 of the flow 11 will be discussed with reference to fig. 6 and 7. Each blade 10 has a trailing pressure side 13, facing the water flow 11, and an opposite leading suction side 14. The terms trailing and leading refers to the rotational direction R. Further each blade has a not visible band side 15 connected, typically welded, to the band 8, a crown side 16 connected, typically welded, to the crown 9, an inlet side 17 for the flow of water, and an outlet side 18 for the flow of water. The blades are arranged with their inlet sides 17 around the circumference of the runner 5 and the outlet sides 18 around the outlet area 19 in the centre of the runner.

Fig. 5 is a partial cross sectional view of a Francis turbine runner according to the invention, taken along section line A-A in fig. 3. Fig. 5 illustrates the outer portion of four blades 10.1-10.4. P is the pitch of the runner, which is the angular spacing between the blades. The blades' inlet sides 17 are rounded. Each blade has an inlet diameter, which is the diameter of the blade's inlet side 17. All the blades' inlet sides collectively have a mean inlet diameter $D_m$, which also could be designated the mean inlet diameter for the blades 10 and the mean inlet diameter for the runner 5. According to the invention at least one blade has an inlet diameter with a deviation from the mean inlet diameter $D_m$ of 0.5 to 3% of the band outlet diameter $D_b$. "Deviation" shall be understood as both positive and negative deviation. Thus, according to the invention, at least one of the blades has an inlet diameter which is either 0.5 to 3% of the band outlet diameter $D_b$ smaller than the mean inlet diameter $D_m$ or 0.5 to 3% of the band outlet diameter $D_b$ greater than the mean inlet diameter $D_m$. As mentioned above, the band outlet diameter $D_b$, i.e. the internal diameter of the band outlet 28, is illustrated in fig. 3.

With further reference to fig. 5, $D_m$ is the mean inlet diameter, $D_{si}$ is the smaller inner inlet diameter, i.e. 3% of the band outlet diameter $D_b$ smaller than the mean inlet diameter $D_m$, $D_{so}$ is the smaller outer inlet diameter, i.e. 0.5% of the band outlet diameter $D_b$ smaller than the mean inlet diameter $D_m$, $D_{gi}$ is the greater inner inlet diameter, i.e. 0.5% of the band outlet diameter $D_b$ greater than the mean inlet diameter $D_m$, and $D_{go}$ is the greater outer inlet diameter, i.e. 3% of the band outlet diameter $D_b$ greater than the mean inlet diameter $D_m$.

Blade 10.1 and 10.4 have inlet diameters in the range limited by $D_{si}$ and $D_{so}$, blade 10.2 has inlet diameter in the range limited by $D_{gi}$ and $D_{go}$, and blade 10.3 has inlet diameter equal to or essentially equal to $D_m$.

As an example, a Francis turbine may have the following dimensions:

Mean inlet diameter, $D_m$: 1000 mm.
Band outlet diameter, $D_b$: 588 mm.

With the notation above, according to the invention:

$$D_{si} = D_m - 3\% \times D_b = 1000mm - 3\% \times 588mm = 1000mm - 17.64mm = 982.36mm.$$

$$D_{so} = D_m - 0.5\% \times D_b = 1000mm - 0.5\% \times 588mm = 1000mm - 2.94mm = 997.06mm.$$

$$D_{gi} = D_m + 0.5\% \times D_b = 1000mm + 0.5\% \times 588mm = 1000mm + 2.94mm = 1002.94mm.$$

$$D_{go} = D_m + 3\% \times D_b = 1000mm + 3\% \times 588mm = 1000mm + 17.64mm = 1017.64mm.$$

Preferably the inlet diameter deviation according to the invention is 0.75 to 1.5% of the band outlet diameter $D_b$, i.e. the numbers 0.5 and 3 in the explanation and calculation above is replaced by 0.75 and 1.5, respectively.

Preferably more than one blade have the deviation according to the invention, as illustrated in fig. 5, where both blades 10.1, 10.2 and 10.4 have the deviation. Preferably the angular distances between blades with the deviation in the same direction varies non-cyclic around the circumference. "Blades with the deviation in the same direction" means blades which either have inlet diameters smaller than the mean inlet diameter or have inlet diameters greater than the mean inlet diameter. This means that the angular distance between blade 10.1 and 10.4, i.e. blades which both have smaller inlet diameters than the mean inlet diameter, shall not cyclically be repeated around the circumference for other blades with smaller inlet diameters than the mean inlet diameter. The angular distance between two blades is equal to the pitch times the number of pitch distances between the blades, as an example, the angular distance between blade 10.1 and 10.4 is 3P.

Preferably also the angular distances between blades without the deviation, i.e. blades with an inlet diameter equal to or essentially equal to $D_m$, varies non-cyclic around the circumference.

It is further preferred that at least one blade with the deviation according to the invention has an inlet diameter greater than the mean inlet diameter $D_m$ and at least one blade with the deviation has an inlet diameter smaller than the mean inlet diameter $D_m$.

The invention provides a Francis turbine runner with inlet diameter that varies non-cyclic around the circumference. This can be achieved by several "random" combinations of angular distances between the blades with and without the deviations.

Fig. 6 and 7 compares Francis turbine blades according to the invention with Francis turbine blades according to prior art, and illustrates the effect of the invention. In fig. 6 blade 10.3 is a blade according to prior art, with an inlet diameter equal to or essentially equal to $D_m$. Blade 10.2 is a blade according to the invention, with an inlet diameter greater than $D_m$. In fig. 7 blade 10.3 is the same as in fig. 6, while blade 10.1 is a blade according to the invention, with an inlet diameter smaller than $D_m$.

In fig. 6 and 7 reference numeral 20 designates the flow, known as wake, from the guide vane trailing edge. The wake 20 is a portion of the flow 11, discussed with reference to fig. 4. Every time a blade passes a guide vane, the blade's inlet side 17 interacts with the wake 20, which generates a small pressure pulsation, also known as water hammer, that travel in all directions. This phenomenon applies both to conventional blades and blades according to the invention. In a conventional Francis turbine runner, where all blades have equal or essentially equal inlet diameters, like blade 10.3, there will be regular time intervals between the pressure pulsations. This means that the pressure pulsations can interfere with each other and build up to noise or vibrations, which in turn may cause resonance in the turbine.

In a Francis turbine runner according to the invention not all blades have equal or essentially equal inlet diameters. Blade 10.2 with an inlet diameter greater than $D_m$ will meet the wake from the guide vane trailing edge earlier than if the blade had an inlet diameter equal to $D_m$, and blade 10.1 with an inlet diameter smaller than $D_m$ will meet the wake from the guide vane trailing edge later than if the blade had an inlet diameter equal to $D_m$. By varying the inlet diameters of the blades and the angular distances between the blades with the deviation in the same direction, as discussed above, there will be irregular time intervals between the pressure pulsations. This means that the pressure pulsations to a less degree than in conventional Francis turbines will interfere with each other, and be less likely to build up to noise or vibrations. With this type of runner the risk for a resonance situation connected to water hammers or pressure pulsations at the runner inlet is greatly reduced or eliminated.

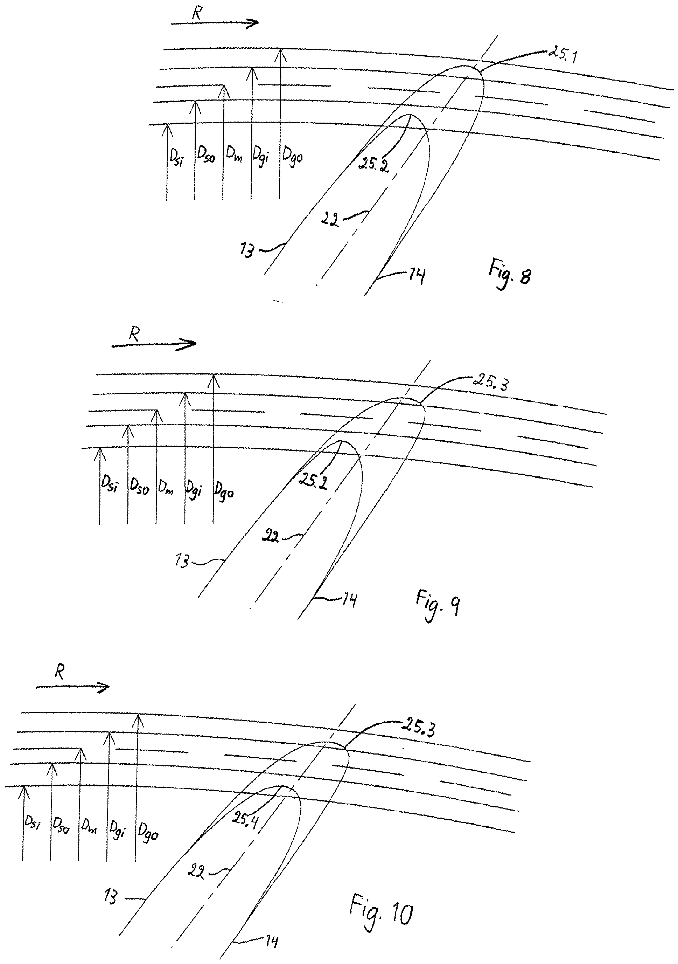

Reference is made to fig. 8, 9 and 10, which are cross sectional views of blades of a Francis turbine runner with the deviation in inlet diameter according to the invention, taken along section line A-A in fig. 3. Fig. 8, 9 and 10 illustrates favourable shapes of the blades, which add to the favourable characteristica of the runner discussed with reference to fig. 6 and 7. To assist in the explanation and definition of these features, fig. 8, 9 and 10 show midlines 22 between the pressure side 13 and the suction side 14. The figures use the same notation for the diameters as in fig. 5. Each figure shows two blades, one with inlet diameter smaller than the mean inlet diameter $D_m$, and one with inlet diameter greater than the mean inlet diameter $D_m$.

Fig. 8 shows that the blade with inlet diameter greater than the mean inlet diameter $D_m$ has an inlet side with a rounding symmetrical about the midline 22, the rounding forms a nose 25.1. The nose is the location on the rounding with the smallest radius of curvature. Fig. 8 also shows that the blade with inlet diameter smaller than the mean inlet diameter has an inlet side with a rounding asymmetrical about the midline, the rounding forms a nose 25.2. Similarly, fig. 9 and 10 shows symmetrical and asymmetrical roundings forming noses.

Preferably, as illustrated in fig. 8, 9 and 10, for a blade with inlet diameter smaller than the mean inlet diameter $D_m$, the nose is either symmetrical 25.4 or asymmetrical 25.2, and if it is asymmetrical, points towards the pressure side 13. It is also preferred that for a blade with inlet diameter greater than the mean inlet diameter $D_m$, the nose is either symmetrical 25.1 or asymmetrical 25.3, and if it is asymmetrical, points towards the suction side 14.

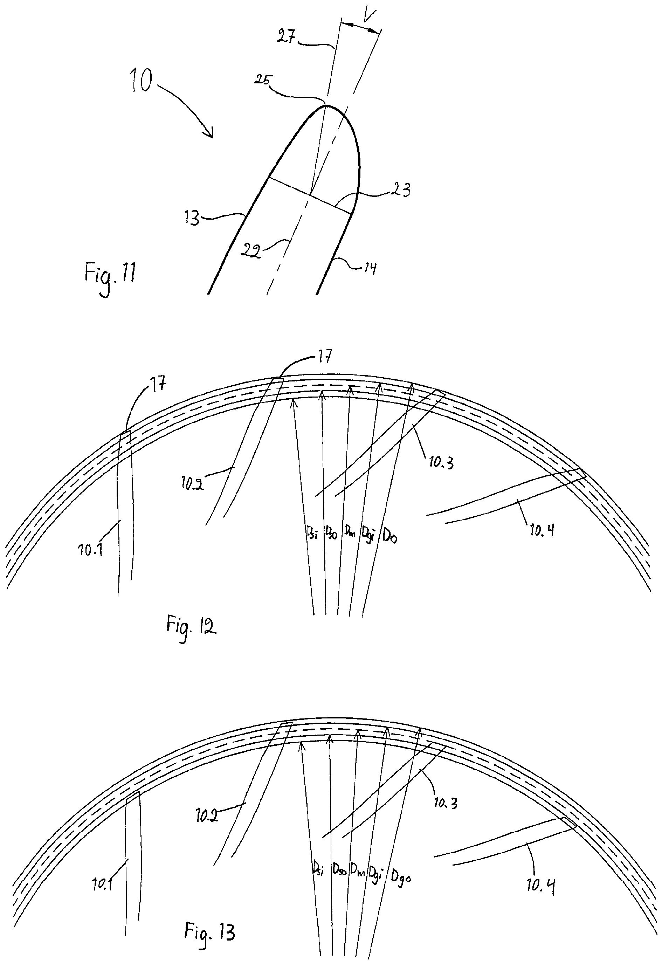

Fig. 11 is a cross sectional view of a blade 10 of a Francis turbine runner according to the invention, taken along section line A-A in fig. 3. A baseline 23 for the rounding perpendicular to the midline 22 has been included. It is preferred that an angle v between the midline 22 and a line 27 through the centre of the nose 25 and the intersection between the midline 22 and the baseline 23 is 0°-15°.

The invention also relates to a method for manufacturing a Francis turbine runner for inlet head above 200 m, as discussed above. The method comprises the steps of:

1) Manufacturing the band 8 and the crown 9; typically by turning and milling plate or cast blanks, in a known manner.

2) Manufacturing all blades 10 identical, with an oversize adapted to assemble the blades with an inlet diameter 0.5 to 3% of the band outlet diameter $D_b$ greater than the mean inlet diameter $D_m$ of the finished runner 5. This is typically done by milling plate or cast blanks, in a known manner.

3) Assembling the blades between the band 8 and the crown 9, with inlet diameter 0.5 to 3% of the band outlet diameter $D_b$ greater than the mean inlet diameter $D_m$ of the finished runner 5. This is typically done by welding the blades in between the band and the crown, in a known manner.

4) Machining some blades' inlet sides 17 to an inlet diameter 0.5 to 3% of the band outlet diameter $D_b$ smaller than the mean inlet diameter $D_m$ of the finished runner, to introduce a non-cyclic variation of the blades inlet diameters around the circumference of the runner 5. This is typically done by milling or grinding, and can be done by jig-mounted and controlled tools or hand-held tools.

Fig. 12 is a partial cross sectional view of a Francis turbine runner according to the invention, taken along section line A-A in fig. 3, after step 3). The inlet sides 17 are machined flat, with an inlet diameter 0.5 to 3% of the band outlet diameter $D_b$ greater than the mean inlet diameter $D_m$ of the finished runner, i.e. between $D_{gi}$ and $D_{go}$, using the notation defined with reference to fig. 5.

Fig. 13 is a partial cross sectional view corresponding to fig. 12, after step 4). Blade 10.2 has inlet diameter machined to 0.5 to 3% of the band outlet diameter $D_b$ greater than the mean inlet diameter $D_m$ of the finished runner, i.e. between $D_{gi}$ and $D_{go}$, and have been further machined compared with fig. 12. Blades 10.1 and 10.4 have inlet diameters machined to 0.5 to 3% of the band outlet diameter $D_b$ smaller than the mean inlet diameter $D_m$ of the finished runner, i.e. between $D_{si}$ and $D_{so}$. Blade 10.3 has inlet diameter machined to or essentially to the mean inlet diameter $D_m$ of the finished runner.

Preferably the above discussed range 0.5 to 3% in step 2), 3) and 4) is replaced by 0.75 to 1.5%.

With reference to fig. 8, 9 and 10, in a preferred embodiment step 4) includes machining some blades' inlet sides to a rounding symmetrical about a midline 22 between the pressure side 13 and the suction side 14, which rounding forms a nose, and preferably also machining some blades' inlet sides to a rounding asymmetrical about a midline 22 between the pressure side 13 and the suction side 14, which rounding also forms a nose.

Preferably step 4) includes machining the inlet sides of blades with inlet diameter between $D_{si}$ and $D_{so}$ to a symmetrical nose 25.4 or an asymmetrical nose 25.2 that points towards the pressure side 13. Step 4) preferably also includes machining the inlet sides of blades with inlet diameter between $D_{gi}$ and $D_{go}$ to a symmetrical nose 25.1 or an asymmetrical nose 25.3 that points towards the suction side 14.

The runner according to the invention may also be manufactured by other methods, e.g. each blade or the entire runner can be cast, forged, grinded and/or welded to the correct shape. The non-cyclic variation of the runner inlet diameter and the runner profile can also be introduced on existing runners by machining, grinding or other methods.

The invention is in the above discussed with reference to cross sectional views taken through the mid portions of the inlet sides 17 of the blades 10 of the runner 5, illustrated in fig. 3. These mid portions are the portions of the inlet sides 17 which interact with the centre part or principal part of the water flow, and therefore must fulfil the inventive idea. The blades' inlet sides 17 extend between the band 8 and the crown 9, and both the shape and inlet diameter of the inlet sides 17 and the mean inlet diameter $D_m$ of the runner may vary along the inlet sides 17 between the band 8 and the crown 9. Typically the blades' inlet sides 17 are concave, i.e. curved towards the centre of the runner, but the shape and the diameter of the inlet sides 17 may also vary in other ways between the band 8 and the crown 9. Portions of the inlet sides 17 away from the mid portions are of less importance to the interaction with the water flow, and consequently are less important than the mid portions for achieving the reduction in noise and vibrations. Therefore, although it is preferred that the portions of the inlet sides away from the mid portions also fulfil the inventive idea, this is strictly not required in order to achieve the object of the invention. As an example, the portions of the inlet sides close to the band and the crown may be rounded off or in another way adapted to the band and the crown.

**Claims**

1. A Francis turbine runner (5) for inlet head above 200 m, comprising a band (8), a crown (9) concentric with the band (8), and a plurality of spaced blades (10) between the band and the crown, for rotation about a turbine axis (26) by the action of water flowing between adjacent blades (10), into a central outlet area (19) and out from the turbine runner through an outlet (28) of the band (8) with an outlet diameter ($D_b$), each blade has a leading suction side (14), as seen in the rotational direction (R), a trialing pressure side (13), a band side (15) connected to the band (8), a crown side (16) connected to the crown (9), an inlet side (17), and an outlet side (18), the blades are arranged with their inlet sides (17) around the circumference of the runner (5), each blade (10) has an inlet diameter, the blades collectively have a mean inlet diameter ($D_m$), **characterized in that** at least one blade (10) has an inlet diameter with a deviation from the mean inlet diameter ($D_m$) of 0.5 to 3% of the band outlet diameter ($D_b$).

2. A Francis turbine runner according to claim 1, wherein the inlet diameter deviation is 0.75 to 1.5% of the band outlet diameter ($D_b$).

3. A Francis turbine runner according to claim 1 or 2, wherein more than one blade (10) have the deviation, and the angular distances between blades with the deviation in the same direction varies non-cyclic around the circumference.

4. A Francis turbine runner according to any of the preceding claims, wherein more than one blade (10) have the deviation, and the angular distances between blades without the deviation varies non-cyclic around the circumference.

5. A Francis turbine runner according to any of the preceding claims, wherein at least one blade (10) with the deviation has an inlet diameter greater than the mean inlet diameter ($D_m$) and at least one blade with the deviation has an inlet diameter smaller than the mean inlet diameter ($D_m$).

6. A Francis turbine runner according to any of the preceding claims, wherein more than one blade (10) have the deviation, and the blades' inlet diameters vary non-cyclic around the circumference of the runner.

7. A Francis turbine runner according to any of the preceding claims, wherein, in a cross-sectional plane perpendicular to the axial direction, at least one blade's inlet side (17) has a rounding symmetrical about a midline (22) between the pressure side (13) and the suction side (14), the rounding forms a nose (25).

8. A Francis turbine runner according to any of the preceding claims, wherein, in a cross-sectional plane perpendicular to the axial direction, at least one blade's inlet side (17) has a rounding asymmetrical about a midline (22) between the pressure side (13) and the suction side (14), the rounding forms a nose (25).

9. A Francis turbine runner according to claim 7 or 8, wherein, for a blade (10) with inlet diameter smaller than the mean inlet diameter ($D_m$), the nose (25) is symmetrical or asymmetrical, if asymmetrical pointing towards the pressure side (13).

10. A Francis turbine runner according to any of the claims 7 - 9, wherein, for a blade (10) with inlet diameter greater than the mean inlet diameter ($D_m$), the nose (25) is symmetrical or asymmetrical, if asymmetrical pointing towards the suction side (14).

11. A Francis turbine runner according to any of the claims 8 - 10, wherein the rounding has a baseline (23) perpendicular to the midline (22), an angle (v) between the midline (22) and a line (27) through the centre of the nose (25) and the intersection between the midline (22) and the baseline (23) is 0°-15°.

12. A method for manufacturing a Francis turbine runner (5) for inlet head above 200 m, comprising a band (8), a crown (9) concentric with the band (8), and a plurality of spaced blades (10) between the band and the crown, for rotation about a turbine axis (26) by the action of water flowing between adjacent blades (10), into a central outlet area (19) and out from the turbine runner through an outlet (28) of the band (8) with an outlet diameter ($D_b$), each blade has a leading suction side (14), as seen in the rotational direction (R), a trialing pressure side (13), a band side (15) connected to the band (8), a crown side (16) connected to the crown (9), an inlet side (17), and an outlet side (18), the blades are arranged with their inlet sides (17) around the circumference of the runner (5), each blade (10) has an inlet diameter, the blades collectively have a mean inlet diameter ($D_m$), **characterized in** the steps of:

1) manufacturing the band (8) and the crown (9);
2) manufacturing all blades (10) identical, with an oversize adapted to assemble the blades with an inlet diameter 0.5 to 3% of the band outlet diameter ($D_b$) greater than the mean inlet diameter ($D_m$) of the finished runner (5);
3) assembling the blades (10) between the band (8) and the crown (9), with an inlet diameter 0.5 to 3% of the band outlet diameter ($D_b$) greater than the mean inlet diameter ($D_m$) of the finished runner (5);
4) machining some blades' inlet sides (17) to an inlet diameter 0.5 to 3% of the band outlet diameter ($D_b$) smaller than the mean inlet diameter ($D_m$) of the finished runner (5), to introduce a non-cyclic variation of the blades (10) inlet diameters around the circumference of the runner (5).

13. A method according to claim 12, wherein the range 0.5 to 3% in step 2), 3) and 4) is replaced by 0.75 to 1.5%.

14. A method according to claim 12 or 13, wherein step 4) includes machining some blades' inlet sides (17) to the mean inlet diameter ($D_m$) of the finished runner (5).

15. A method according to any of the claims 12 - 14, wherein step 4) includes machining some blades' inlet sides (17) to a rounding symmetrical about a midline (22) between the pressure side (13) and the suction side (14), the rounding forms a nose (25).

16. A method according to any of the claims 12 - 15, wherein step 4) includes machining some blades' inlet sides (17) to a rounding asymmetrical about a midline (22) between the pressure side (13) and the suction side (14), the rounding forms a nose (25).

**17.** A method according to any of the claims 12 - 16, wherein step 4) includes machining the inlet sides (17) of blades (10) with inlet diameter smaller than the mean inlet diameter ($D_m$) to a rounding symmetrical or asymmetrical about a midline (22) between the pressure side (13) and the suction side (14), the rounding forms a nose (25), if asymmetrical pointing towards the pressure side (13).

**18.** A method according to any of the claims 12 - 17, wherein step 4) includes machining the inlet sides (17) of blades (10) with inlet diameter greater than the mean inlet diameter ($D_m$) to a rounding symmetrical or asymmetrical about a midline (22) between the pressure side (13) and the suction side (14), the rounding forms a nose (25), if asymmetrical pointing towards the suction side (14).

**Patentansprüche**

**1.** Laufrad einer Francis-Turbine (5) für einen Einlasskopf über 200 m, umfassend ein Band (8), eine zum Band (8) konzentrische Kappe (9) und mehrere beabstandete Schaufeln (10) zwischen dem Band und der Kappe zur Drehung um eine Turbinenachse (26) durch die Wirkung von Wasser, das zwischen benachbarten Schaufeln (10) in einen zentralen Auslassbereich (19) und aus dem Turbinenlaufrad durch einen Auslass (28) des Bandes (8) mit einem Auslassdurchmesser (Db) fließt, wobei jede Schaufel eine vordere Saugseite (14) aufweist, wie in der Drehrichtung (R) gesehen, einen nachlaufenden Druckrand (13), eine mit dem Band (8) verbundene Bandseite (15), eine mit der Kappe (9) verbundene Kappenseite (16), eine Einlassseite (17) und eine Auslassseite (18), wobei die Schaufeln mit ihren Einlassseiten (17) um den Umfang des Laufrades (5) angeordnet sind, wobei jede Schaufel (10) einen Einlassdurchmesser aufweist, wobei die Schaufeln zusammen einen mittleren Einlassdurchmesser (Dm) aufweisen, **dadurch gekennzeichnet, dass** mindestens eine Schaufel (10) einen Einlassdurchmesser mit einer Abweichung vom mittleren Einlassdurchmesser (Dm) von 0,5 bis 3 % des Bandauslassdurchmessers (Db) aufweist.

**2.** Laufrad einer Francis-Turbine nach Anspruch 1, wobei die Abweichung des Einlassdurchmessers 0,75 bis 1,5 % des Bandauslassdurchmessers (Db) beträgt.

**3.** Laufrad einer Francis-Turbine nach Anspruch 1 oder 2, wobei mehr als eine Schaufel (10) die Abweichung aufweist und die Winkelabstände zwischen den Schaufeln mit der Abweichung in die gleiche Richtung azyklisch um den Umfang variieren.

**4.** Laufrad einer Francis-Turbine nach einem der vorhergehenden Ansprüche, wobei mehr als eine Schaufel (10) die Abweichung aufweist und die Winkelabstände zwischen den Schaufeln ohne die Abweichung azyklisch um den Umfang variieren.

**5.** Laufrad einer Francis-Turbine nach einem der vorhergehenden Ansprüche, wobei mindestens eine Schaufel (10) mit der Abweichung einen Einlassdurchmesser größer als der mittlere Einlassdurchmesser (Dm) und mindestens eine Schaufel mit der Abweichung einen Einlassdurchmesser kleiner als der mittlere Einlassdurchmesser (Dm) aufweist.

**6.** Laufrad einer Francis-Turbine nach einem der vorhergehenden Ansprüche, wobei mehr als eine Schaufel (10) die Abweichung aufweist und die Einlassdurchmesser der Schaufeln azyklisch um den Umfang des Laufrades variieren.

**7.** Laufrad einer Francis-Turbine nach einem der vorhergehenden Ansprüche, wobei in einer Querschnittsebene senkrecht zur Axialrichtung mindestens eine Schaufeleinlassseite (17) eine Rundung symmetrisch um eine Mittellinie (22) zwischen dem Druckrand (13) und der Saugseite (14) aufweist, wobei die Rundung einen Vorsprung (25) bildet.

**8.** Laufrad einer Francis-Turbine nach einem der vorhergehenden Ansprüche, wobei in einer Querschnittsebene senkrecht zur Axialrichtung mindestens eine Schaufeleinlassseite (17) eine Rundung asymmetrisch um eine Mittellinie (22) zwischen dem Druckrand (13) und der Saugseite (14) aufweist, wobei die Rundung einen Vorsprung (25) bildet.

**9.** Laufrad einer Francis-Turbine nach Anspruch 7 oder 8, wobei für eine Schaufel (10) mit einem Einlassdurchmesser kleiner als der mittlere Einlassdurchmesser (Dm) der Vorsprung (25) symmetrisch oder asymmetrisch ist, wenn er asymmetrisch zum Druckrand (13) gerichtet ist.

**10.** Laufrad einer Francis-Turbine nach einem der Ansprüche 7 bis 9, wobei für eine Schaufel (10) mit einem Einlassdurchmesser größer als der mittlere Einlassdurchmesser (Dm) der Vorsprung (25) symmetrisch oder asymmetrisch ist, wenn er asymmetrisch zur Saugseite (14) gerichtet ist.

11. Laufrad einer Francis-Turbine nach einem der Ansprüche 8 bis 10, wobei die Rundung eine Grundlinie (23) senkrecht zur Mittellinie (22), einen Winkel (v) zwischen der Mittellinie (22) und einer Linie (27) durch die Mitte des Vorsprungs (25) aufweist und der Schnittpunkt zwischen der Mittellinie (22) und der Grundlinie (23) 0°-15° beträgt.

12. Verfahren zum Herstellen eines Laufrads einer Francis-Turbine (5) für einen Einlasskopf über 200 m, umfassend ein Band (8), eine zum Band (8) konzentrische Kappe (9) und mehrere beabstandete Schaufeln (10) zwischen dem Band und der Kappe zur Drehung um eine Turbinenachse (26) durch die Wirkung von Wasser, das zwischen benachbarten Schaufeln (10) in einen zentralen Auslassbereich (19) und aus dem Turbinenlaufrad durch einen Auslass (28) des Bandes (8) mit einem Auslassdurchmesser (Db) fließt, wobei jede Schaufel eine vordere Saugseite (14) aufweist, wie in der Drehrichtung (R) gesehen, einen nachlaufenden Druckrand (13), eine mit dem Band (8) verbundene Bandseite (15), eine mit der Kappe (9) verbundene Kappenseite (16), eine Einlassseite (17) und eine Auslassseite (18), wobei die Schaufeln mit ihren Einlassseiten (17) um den Umfang des Laufrades (5) angeordnet sind, wobei jede Schaufel (10) einen Einlassdurchmesser aufweist, wobei die Schaufeln zusammen einen mittleren Einlassdurchmesser (Dm) aufweisen, **gekennzeichnet durch** die folgenden Schritte:

1) das Herstellen des Bandes (8) und der Kappe (9);
2) das einheitliche Herstellen aller Schaufeln (10) mit einem Übermaß, das angepasst ist, um die Schaufeln mit einem Einlassdurchmesser von 0,5 bis 3 % des Bandauslassdurchmessers (Db) größer als der mittlere Einlassdurchmesser (Dm) des fertigen Laufrades (5) zu montieren;
3) das Anordnen der Schaufeln (10) zwischen dem Band (8) und der Kappe (9) mit einem Einlassdurchmesser von 0,5 bis 3 % des Bandauslassdurchmessers (Db) größer als der mittlere Einlassdurchmesser (Dm) des fertigen Laufrades (5);
4) das Bearbeiten einiger Schaufeleinlassseiten (17) auf einen Einlassdurchmesser von 0,5 bis 3 % des Bandauslassdurchmessers (Db), der kleiner ist als der mittlere Einlassdurchmesser (Dm) des fertigen Laufrades (5), um eine azyklische Variation des Einlassdurchmessers der Schaufeln (10) um den Umfang des Laufrades (5) einzuführen.

13. Verfahren nach Anspruch 12, wobei der Bereich 0,5 bis 3 % in Schritt 2), 3) und 4) durch 0,75 bis 1,5 % ersetzt wird.

14. Verfahren nach Anspruch 12 oder 13, wobei Schritt 4) das Bearbeiten der Schaufeleinlassseiten (17) bis zum mittleren Einlassdurchmesser (Dm) des fertigen Laufrades (5) beinhaltet.

15. Verfahren nach einem der Ansprüche 12 bis 14, wobei Schritt 4) das Bearbeiten einiger Schaufeleinlassseiten (17) zu einer Rundung beinhaltet, die symmetrisch um eine Mittellinie (22) zwischen dem Druckrand (13) und der Saugseite (14) liegt, wobei die Rundung einen Vorsprung (25) bildet.

16. Verfahren nach einem der Ansprüche 12 bis 15, wobei Schritt 4) das Bearbeiten einiger Schaufeleinlassseiten (17) zu einer Rundung beinhaltet, die asymmetrisch um eine Mittellinie (22) zwischen dem Druckrand (13) und der Saugseite (14) liegt, wobei die Rundung einen Vorsprung (25) bildet.

17. Verfahren nach einem der Ansprüche 12 bis 16, wobei Schritt 4) das Bearbeiten der Einlassseiten (17) von Schaufeln (10) mit einem Einlassdurchmesser kleiner als der mittlere Einlassdurchmesser (Dm) zu einer Rundung symmetrisch oder asymmetrisch um eine Mittellinie (22) zwischen dem Druckrand (13) und der Saugseite (14) beinhaltet, wobei die Rundung einen Vorsprung (25) bildet, wenn sie asymmetrisch zum Druckrand (13) gerichtet ist.

18. Verfahren nach einem der Ansprüche 12 bis 17, wobei Schritt 4) das Bearbeiten der Einlassseiten (17) von Schaufeln (10) mit einem Einlassdurchmesser größer als der mittlere Einlassdurchmesser (Dm) zu einer Rundung symmetrisch oder asymmetrisch um eine Mittellinie (22) zwischen dem Druckrand (13) und der Saugseite (14) beinhaltet, wobei die Rundung einen Vorsprung (25) bildet, wenn diese asymmetrisch zur Saugseite (14) gerichtet ist.

**Revendications**

1. Une roue de turbine Francis (5) pour une tête d'entrée supérieure à 200 m, comprenant une bande (8), une couronne (9) concentrique à la bande (8), et une pluralité d'pales espacées (10) situées entre la bande et la couronne, pour tourner autour d'un axe de turbine (26) sous l'action d'eau s'écoulant entre des pales (10) adjacentes, dans une zone de sortie centrale (19) et à l'extérieur de la roue de turbine par une sortie (28) de la bande (8) avec un diamètre de sortie ($D_b$), chaque pale a un côté d'aspiration antérieur (14), vu dans le sens de rotation (R), un côté de pression postérieur (13), un côté de bande (15) relié à la bande (8), un côté de couronne (16) relié à la couronne (9), un côté d'entrée (17) et un côté de sortie (18), les pales sont disposées avec leurs côtés d'entrée (17) autour de la circonférence de la roue (5), chaque pale (10) a un diamètre d'entrée, les pales ont collectivement un diamètre d'entrée moyen ($D_m$), **caractérisée en ce qu'**au moins une pale (10) a un diamètre d'entrée avec un écart depuis le diamètre d'entrée moyen ($D_m$) allant de 0,5 à 3% du diamètre de sortie de bande ($D_b$).

**2.** Une roue de turbine Francis selon la revendication 1, dans laquelle l'écart de diamètre d'entrée est de 0,75 à 1,5 % du diamètre de sortie de bande ($D_b$).

**3.** Une roue de turbine Francis selon la revendication 1 ou la revendication 2, dans laquelle plus d'une pale (10) présente l'écart, et les distances angulaires entre les pales avec l'écart dans la même direction varient de manière non cyclique sur la circonférence.

**4.** Une roue de turbine Francis selon l'une quelconque des revendications précédentes, dans laquelle plus d'une pale (10) présente l'écart, et les distances angulaires entre les pales sans l'écart varient de manière non cyclique sur la circonférence.

**5.** Une roue de turbine Francis selon l'une quelconque des revendications précédentes, dans laquelle au moins une pale (10) présentant l'écart a un diamètre d'entrée supérieur au diamètre d'entrée moyen ($D_m$) et au moins une pale présentant l'écart a un diamètre d'entrée inférieur au diamètre d'entrée moyen ($D_m$).

**6.** Une roue de turbine Francis selon l'une quelconque des revendications précédentes, dans laquelle plus d'une pale (10) présente l'écart, et les diamètres d'entrée des pales varient de façon non cyclique sur la circonférence de la roue.

**7.** Une roue de turbine Francis selon l'une quelconque des revendications précédentes, dans laquelle, dans un plan transversal perpendiculaire à la direction axiale, au moins un côté d'entrée d'pale (17) présente un arrondi symétrique autour d'une ligne médiane (22) située entre le côté de pression (13) et le côté d'aspiration (14), l'arrondi formant un nez (25).

**8.** Une roue de turbine Francis selon l'une quelconque des revendications précédentes, dans laquelle, dans un plan transversal perpendiculaire à la direction axiale, au moins un côté d'entrée d'pale (17) présente un arrondi asymétrique autour d'une ligne médiane (22) située entre le côté de pression (13) et le côté d'aspiration (14), l'arrondi formant un nez (25).

**9.** Une roue de turbine Francis selon la revendication 7 ou la revendication 8, dans laquelle, pour une pale (10) ayant un diamètre d'entrée inférieur au diamètre d'entrée moyen ($D_m$), le nez (25) est symétrique ou asymétrique, étant, s'il est asymétrique, dirigé vers le côté de pression (13).

**10.** Une roue de turbine Francis selon l'une quelconque des revendications 7 à 9, dans laquelle, pour une pale (10) ayant un diamètre d'entrée supérieur au diamètre d'entrée moyen ($D_m$), le nez (25) est symétrique ou asymétrique, étant, s'il est asymétrique, dirigé vers le côté d'aspiration (14).

**11.** Une roue de turbine Francis selon l'une quelconque des revendications 8 à 10, dans laquelle l'arrondi a une ligne de base (23) perpendiculaire à la ligne médiane (22), un angle (v) entre la ligne médiane (22) et une ligne (27) passant par le centre du nez (25) et l'intersection entre la ligne médiane (22) et la ligne de base (23) est de 0° à 15°.

**12.** Un procédé de fabrication d'une roue (5) de turbine Francis pour une tête d'entrée supérieure à 200 m, comprenant une bande (8), une couronne (9) concentrique à la bande (8), et une pluralité de pales espacées (10) situées entre la bande et la couronne, pour tourner autour d'un axe de turbine (26) par action d'eau circulant entre des pales adjacentes (10), dans une zone de sortie centrale (19) et sortant de la roue de turbine par un orifice (28) de la bande (8) avec un diamètre de sortie ($D_b$), chaque pale a un côté d'aspiration antérieur (14), vu dans le sens de rotation (R), un côté de pression postérieur (13), un côté de bande (15) relié à la bande (8), un côté de couronne (16) relié à la couronne (9), un côté d'entrée (17) et un côté de sortie (18), les pales sont disposées avec leurs côtés d'entrée (17) autour de la circonférence de la roue (5), chaque pale (10) a un diamètre d'entrée, les pales ont collectivement un diamètre d'entrée moyen ($D_m$), **caractérisée par** les étapes suivantes :

1) fabrication de la bande (8) et de la couronne (9) ;

2) fabrication de toutes les pales (10) à l'identique, avec une surdimension adaptée pour assembler les pales avec un diamètre d'entrée étant de 0,5 à 3% du diamètre de sortie de bande ($D_b$) supérieur au diamètre d'entrée moyen ($D_m$) de la roue (5) finie ;

3) assemblage des pales (10) entre la bande (8) et la couronne (9), avec un diamètre d'entrée de 0,5 à 3% du diamètre de sortie de bande ($D_b$) supérieur au diamètre d'entrée moyen ($D_m$) de la roue (5) finie ;

4) usinage de certains côtés d'entrée (17) de pales à un diamètre d'entrée de 0,5 à 3% du diamètre de sortie de bande ($D_b$) inférieur au diamètre d'entrée moyen ($D_m$) de la roue (5) finie, pour introduire une variation non cyclique des diamètres d'entrée des pales (10) sur la circonférence de la roue (5).

**13.** Un procédé selon la revendication 12, dans lequel la plage de 0,5 à 3% à l'étape 2), 3) et 4) est remplacée par 0,75 à 1,5%.

**14.** Un procédé selon la revendication 12 ou la revendication 13, dans lequel l'étape 4) comprend le fait d'usiner les côtés d'entrée (17) de certaines pales jusqu'au diamètre d'entrée moyen ($D_m$) de la roue (5) finie.

**15.** Un procédé selon l'une quelconque des revendications 12 à 14, dans lequel l'étape 4) comprend le fait d'usiner les côtés d'entrée (17) de certaines pales selon un arrondi symétrique autour d'une ligne médiane (22) entre le côté de pression (13) et le côté d'aspiration (14), l'arrondi formant un nez (25).

**16.** Un procédé selon l'une quelconque des revendications 12 à 15, dans lequel l'étape 4) comprend le fait d'usiner les côtés d'entrée (17) de certaines pales selon un arrondi asymétrique autour d'une ligne médiane (22) entre le côté de pression (13) et le côté d'aspiration (14), l'arrondi formant un nez (25).

**17.** Un procédé selon l'une quelconque des revendications 12 à 16, dans lequel l'étape 4) comprend le fait d'usiner les côtés d'entrée (17) de pales (10) avec un diamètre d'entrée inférieur au diamètre d'entrée moyen ($D_m$) selon un arrondi symétrique ou asymétrique autour d'une ligne médiane (22) entre le côté de pression (13) et le côté d'aspiration (14), l'arrondi formant un nez (25), qui, s'il est asymétrique, est dirigé vers le côté de pression (13).

**18.** Un procédé selon l'une quelconque des revendications 12 à 17, dans lequel l'étape 4) comprend le fait d'usiner les côtés d'entrée (17) de pales (10) avec un diamètre d'entrée supérieur au diamètre d'entrée moyen ($D_m$) selon un arrondi symétrique ou asymétrique autour d'une ligne médiane (22) entre le côté de pression (13) et le côté d'aspiration (14), l'arrondi formant un nez (25), qui, s'il est asymétrique, est dirigé vers le côté d'aspiration (14).

Fig. 1

Fig. 2

Fig. 3

Fig. 4

Fig. 5

20

17    17

R →

10.2    10.3

$D_m$

Fig. 6

20

R →

10.3

10.1

$D_m$

Fig. 7

14

Fig. 8

Fig. 9

Fig. 10

Fig. 11

Fig. 12

Fig. 13

**EP 2 923 075 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110008150 A